# EUROPÄISCHE PATENTSCHRIFT

(11) **EP 1 062 797 B1**
(45) Veröffentlichungstag und Bekanntmachung des Hinweises auf die Patenterteilung: **20.08.2008**
(21) Anmeldenummer: 99916746.3
(22) Anmeldetag: 17.02.1999
(51) Int. Cl.: H04M 3/60, H04M 3/50

(54) **KOMMUNIKATIONSANLAGE**
COMMUNICATIONS INSTALLATION
INSTALLATION DE COMMUNICATION

(30) Priorität: 09.03.1998 DE 19810059; 27.03.1998 DE 19813726
(43) Veröffentlichungstag der Anmeldung: 27.12.2000
(73) Patentinhaber: Siemens Enterprise Communications GmbH & Co. KG, 81379 München (DE)
(72) Erfinder: KIENBERGER, Helmut, D-81249 München (DE)
(74) Vertreter: Maier, Daniel Oliver
(86) Internationale Anmeldenummer: PCT/DE1999/000439
(87) Internationale Veröffentlichungsnummer: WO 1999/046919

(56) Entgegenhaltungen:
- US-A- 5 117 454
- DIETER WULFF: "DER VERMITTLUNGSPLATZ EMS" TELCOM REPORT., Bd. 2, Nr. 3, März 1979 (1979-03), Seiten 138-141, XP002110401 SIEMENS AG. MUNCHEN., DE ISSN: 0344-4724

## Beschreibung

Die vorliegende Erfindung betrifft eine Kommunikationsanlage für Kommunikationsnetze, insbesondere für private Kommunikationsnetze, wobei mit Hilfe einer Anrufverteileinrichtung eingehende Anrufe innerhalb des Kommunikationsnetzes auf eine Vermittlungseinrichtung der Kommunikationsanlage verteilt und die an die Vermittlungseinrichtung angelegten Anrufe von der Vermittlungseinrichtung angenommen und gegebenenfalls an einen gewünschten Teilnehmer des Kommunikationsnetzes weitervermittelt werden.

Bekanntermaßen werden (auch als Vermittlungsfernsprecher bezeichnete) Vermittlungseinrichtungen zum Vermitteln von Anrufen für Teilnehmer eines Kommunikationsnetzes, insbesondere eines privaten Kommunikationsnetzes, eingesetzt.

In dem Kommunikationsnetz ist mindestens eine (auch als Anrufordner bezeichnete) Anrufverteileinrichtung vorgesehen, deren Aufgabe es ist, die eingehenden Anrufe gemäß bestimmten Kriterien zu ordnen und auf eine entsprechende Vermittlungseinrichtungen zu verteilen. Insbesondere weist die Anrufverteileinrichtung die eingehenden Anrufe gemäß einem FIFO-Prinzip (d. h. einem Warteschlangenprinzip) der entsprechenden Vermittlungseinrichtungen zu. Die Anrufverteileinrichtung kann mehrere Warteschlangen (Unterqueues) aufweisen, die jeweils für Anrufe unterschiedlicher Prioritäten zuständig sind, wobei die Anrufverteileinrichtung zunächst die Anrufe der Warteschlange mit der höchsten Priorität, der zweithöchsten Priorität usw. nacheinander abarbeitet und die entsprechenden Anrufe nacheinander an die entsprechende Vermittlungseinrichtung anlegt.

Jeder Vermittlungseinrichtung besitzt eine Bedienkonsole, die mehrere Abfragetasten aufweist, welche unterschiedlichen Anrufarten (wie z. B. Amtsruf, interner Ruf usw.) zugeordnet sind. Bei Weiterleitung eines Anrufs durch die Anrufverteileinrichtung wird der jeweilige Anruf abhängig von seiner Anrufart automatisch der entsprechenden Abfragetaste der Bedienkonsole zugewiesen, die beispielsweise durch Blinken einen anliegenden Anruf anzeigt. Die Vermittlungsperson kann anschließend durch Drücken der entsprechenden Abfragetaste den jeweiligen Anruf annehmen und entsprechend den Wünschen des Anrufers an einen Teilnehmer des Kommunikationsnetzes weiterleiten.

Jeder Abfragetaste der Bedienkonsole ist eine Steuereinheit (Subunit) zugeordnet, welche durch eine Softwarefunktion der Systemsoftware gebildet ist und an die von der Anrufverteileinrichtung automatisch der entsprechende Anruf angelegt wird und eine entsprechende Software sowie eine entsprechende Datenbasis umfaßt. Jede Steuereinheit verarbeitet die Tastenanreize der entsprechenden Abfragetaste und stellt ergänzend zu der als physikalisches Abfrageorgan dienenden Abfragetaste ein logisches Abfrageorgan dar.

Bei der zuvor beschriebenen Kommunikationsanlage bzw. Vermittlungseinrichtung können folgende Probleme auftreten. Wie bereits zuvor beschrieben worden ist, ist jeder Abfragetaste (physikalisches Abfrageorgan), die zum Abfragen bzw. Annehmen eines Anrufs einer entsprechenden Anrufart dient, jeweils eine entsprechende Steuereinheit (Subunit, logisches Abfrageorgan) zugewiesen. Wurde von der Anrufverteileinrichtung (Anrufordner) einer Steuereinheit ein Anruf der entsprechenden Anrufart zugewiesen (Rufzustand), ist diese Steuereinheit sowie die entsprechende Abfragetaste für weitere Anrufe derselben Anrufart so lange blockiert, bis der angenommene Anruf weitervermittelt worden ist. Weitere Anrufe desselben Anruftyps können von der Anrufverteileinrichtung dieser Steuereinheit nicht zugewiesen werden und müssen demnach in einem Wartezustand verbleiben bis die entsprechende Steuereinheit frei geworden ist, selbst wenn die wartenden Anrufe eine höhere Priorität als der derzeit angenommene Anruf besitzen. Allgemein können in der Kommunikationsanlage die Prioritäten für die einzelnen Anrufe konfiguriert, d. h. per Programmierung festgelegt werden. Anrufe mit einer höheren Priorität können z. B. Notrufe oder Zweitanrufe, hier insbesondere nach Vermittlungsfehlern zurückgeholte Anrufe, sein.

Zudem besteht bei den bekannten Kommunikationsanlagen insbesondere bezüglich der zuletzt genannten Anrufart das Bedürfnis, Anrufe, die von der Vermittlungseinrichtung irrtümlich an einen falschen Teilnehmer vermittelt worden sind, wieder auf die Vermittlungseinrichtung zurückzuschalten und damit zurückzuholen, um diese Anrufe nachfolgend an den richtigen Teilnehmer neu zu vermitteln. Dies ist prinzipiell nur so lange möglich, bis der gerufene Teilnehmer noch nicht den Anruf angenommen hat. Nach Zurückholen des falsch vermittelten Anrufs soll der falsch vermittelte Anrufer sofort wieder mit derselben Vermittlungseinrichtung, d. h. mit dem Vermittlungsfernsprecher, über den der Anruf zuvor irrtümlich falsch vermittelt worden ist, verbunden werden.

Für das zuvor beschriebene Problem der falsch vermittelten Anrufe ist bereits eine Lösung bekannt, die jedoch von anderen System- und Hardwarevoraussetzungen als die vorliegende Erfindung ausgeht. So ist bei der Kommunikationsanlage dieser bekannte Lösung das Warteschlangenprinzip, wie es bei der Kommunikationsanlage, welche die vorliegende Erfindung betrifft, nicht vorhanden. Statt dessen sind an der Vermittlungseinrichtung eine Vielzahl von Tasten vorgesehen, wobei eine erste Art von Tasten durch Blinken eingehende Anrufe (gegebenenfalls gleichzeitig) automatisch signalisieren. Des weiteren ist eine zweite Art von Tasten vorgesehen, die als Abfrageorgane im Sinne der Vermittlungseinrichtung gemäß der vorliegenden Erfindung dienen. Zum Vermitteln eines anliegenden Anrufs kann die Vermittlungsperson durch Drücken einer blinkenden ersten Taste den entsprechenden Anruf annehmen und einer der zweiten Tasten zuordnen. Im Gegensatz zu der Kommunikationsanlage des eingangs beschriebenen Typs, auf den sich die vorliegende Erfindung bezieht, hat somit die Vermittlungsperson bei dieser Art der bekannten Kommunikationsanlage eine Wahlmöglichkeit, welcher Abfragetaste welcher Anruf zugewiesen wird. Diese Wahlmöglichkeit fehlt bei der gattungsgemäßen Kommunikationsanlage, da hier von der Anrufverteileinrichtung (Anrufordner) jeder Anruf abhängig von der entsprechenden Anrufart automatisch der entsprechenden Abfragetaste der Bedienkonsole der Vermittlungseinrichtung zugewiesen wird. Bei der zuvor beschriebenen bekannten Kommunikationsanlage besteht die Möglichkeit, Anrufe nach Vermittlungsfehlern zurückzuholen, wobei ein zurückgeholter Anruf von dem System direkt auf eine freie zweite Taste geschaltet wird. Dies ist insbesondere deshalb bei dieser Lösung möglich, da die zweiten Tasten nicht automatisch durch eingehende Anrufe belegt werden, so daß die zuvor beschriebenen Probleme im Prinzip hier nicht auftreten.

Der vorliegenden Erfindung liegt die Aufgabe zugrunde, eine Kommunikationsanlage der eingangs beschriebenen Art, d. h. eine Kommunikationsanlage, bei der die Abfrageorgane automatisch mit Anrufen belegt werden, zu schaffen, bei der für Anrufe höherer Priorität Wartezeiten vermieden werden können. Insbesondere soll mit Hilfe dieser Kommunikationsanlage ein Zurückholen von falsch vermittelten Anrufen möglich sein.

Diese Aufgabe wird gemäß der vorliegenden Erfindung durch eine Kommunikationsanlage mit den in Anspruch 1 angegebenen Merkmalen gelöst. Die Unteransprüche beschreiben bevorzugte und vorteilhafte Ausführungsformen der vorliegenden Erfindung, die ihrerseits zu einer prioritätsgerechten und möglichst raschen Anrufvermittlung bzw. zu einem problemlosen Zurückholen von falsch vermittelten Anrufen beitragen.

Gemäß der vorliegenden Erfindung sind den einzelnen Anrufannahmemitteln bzw. Abfrageorganen mindestens zwei Steuereinheiten bzw. Steuermittel zugewiesen, wobei die einen Steuermittel für Anrufe niedriger Priorität und die anderen Steuermittel für Anrufe höherer Priorität zuständig sind. Die Anrufannahmemittel sind gemeinsam den einzelnen Steuereinheiten zugeordnet und können insbesondere in Form von Abfragetasten mit Leuchtdioden gebildet sein, die bei Anlegen eines entsprechenden Anrufs blinken. Des weiteren kann im Display der Vermittlungseinrichtung bzw. der entsprechenden Bedienkonsole jeder anliegende Anruf angezeigt werden.

Die Anrufverteileinrichtung der erfindungsgemäßen Kommunikationsanlage verteilt die eingehenden Anrufe auf die einzelnen Vermittlungseinrichtungen, wobei vorteilhafterweise die Anrufer abhängig von der jeweiligen Anrufart den entsprechenden ersten oder zweiten Steuermitteln zugewiesen werden. Ein für eine Abfragetaste an der Vermittlungseinrichtung anliegender Anruf wird der Vermittlungsperson beispielsweise visuell angezeigt, wobei diese durch Betätigen der Abfragetaste den Anruf der entsprechenden Anrufart annehmen kann. Durch die erfindungsgemäß vorgeschlagene Verwendung von zwei separaten Steuereinheiten wird gewährleistet, daß bei Betätigen einer Abfragetaste automatisch der an der für höherpriore Anrufe zuständigen Steuereinheit anliegende Anruf durchgeschaltet wird, während ein an der für niederpriore Anrufe zuständigen Steuereinheit anliegender Anruf nur dann zugeschaltet wird, falls kein Anruf höherer Priorität anliegt. Auf diese Weise kann die Wartezeit für Anrufe höherer Priorität deutlich reduziert werden.

Gemäß einer Variante der vorliegenden Erfindung können der Vermittlungseinrichtung sämtliche anliegende Anrufe der Vermittlungseinrichtung über das Display oder eine grafische Bedienoberfläche mitgeteilt werden. Dies trifft insbesondere auf alle Anrufe mit höherer Priorität zu. Die Vermittlungsperson kann anschließend über eine Tastatur oder eine Maus etc. den gewünschten Anruf übernehmen und gegebenenfalls weitervermitteln.

Die Ausgestaltung der Kommunikationsanlage der vorliegenden Erfindung ermöglicht zudem, daß falsch vermittelte Anrufe rasch an die Vermittlungseinrichtung zurückgeholt werden können, ehe der gerufene Teilnehmer den Anruf angenommen hat, da in diesem Fall durch Betätigung einer entsprechenden Anrufrückholtaste der zurückgeholte Anruf sofort wieder auf die entsprechende Steuereinheit, die für höherpriore Anrufe zuständig ist, geschaltet wird, so daß der zurückgeholte Anruf sofort mit der Vermittlungsperson verbunden werden kann.

Die erfindungsgemäß vorgeschlagene Lösung ermöglicht im Prinzip eine größtenteils unveränderte Übernahme der bestehenden Kommunikationsanlage und kann durch eine einfache Anpassung der Software realisiert werden. Die bestehende Bedienoberfläche für die Abfrage von anliegenden Anrufen kann unverändert beibehalten werden, wobei trotz der Verwendung einer relativ geringen Anzahl von Tasten an der Vermittlungseinrichtung eine große Flexibilität bei der Anrufvermittlung gewährleistet ist.

Die Erfindung wird nachfolgend anhand bevorzugter Ausführungsbeispiele unter Bezugnahme auf die beigefügte Zeichnung näher erläutert.
Figur 1 zeigt ein vereinfachtes Blockschaltbild eines bevorzugten Ausführungsbeispiels der Kommunikationsanlage der vorliegenden Erfindung,
Figur 2 zeigt eine vergrößerte Darstellung eines Ausschnitts von Figur 1 zur Erläuterung der Anrufverteilung und der Anrufabfrage bei dem in Figur 1 gezeigten Ausführungsbeispiel, und
Figur 3a-c zeigen vereinfachte Darstellungen zur Erläuterung der Anrufrückholung bei der erfindungsgemäßen Kommunikationsanlage.

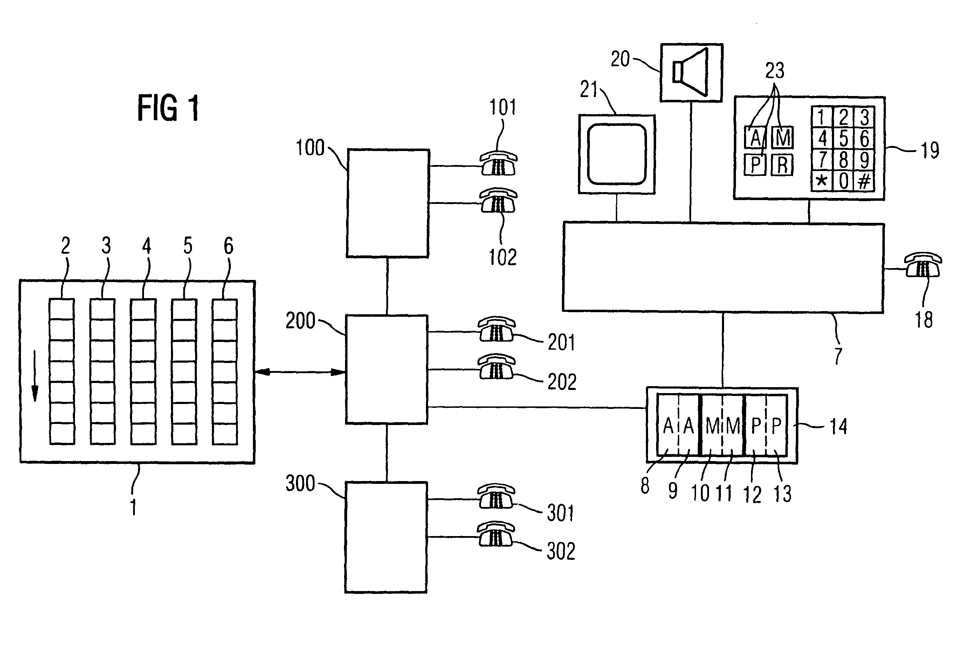

Figur 1 zeigt anhand eines schematischen Blockschaltbilds den grundsätzlichen Aufbau eines bevorzugten Ausführungsbeispiels einer Kommunikationsanlage gemäß der vorliegenden Erfindung. Gemäß Figur 1 umfaßt die Kommunikationsanlage beispielsweise drei Vermittlungs- oder Netzknoten 100, 200 bzw. 300, die jeweils von mindestens einem Anrufordner 1 bedient werden, um eingehende Anrufe den Vermittlungsfernsprechern des entsprechenden Netzknotens zuzuführen. In Fig. 1 ist lediglich beispielhaft für den Vermittlungsplatz 200 ein Anrufordner 1, eine Steuereinrichtung (Systemsoftware) 14 sowie eine Bedienkonsole 7, die von einer Vermittlungsperson über eine Tastatur 19 bedient werden kann, dargestellt. Des weiteren ist ein Display oder ein Bildschirm 21 vorgesehen, um Mitteilungen oder Anrufe visuell anzuzeigen. Bei Verwendung eines Bildschirms kann die Vermittlungsperson auch über eine grafische Benutzeroberfläche (z. B. mit Hilfe einer Maus) Eingaben tätigen. Zudem ist ein Lautsprecher 20 für akustische Ausgaben angeschlossen. Die Bedienkonsole 7 dient zum Vermitteln von Anrufen innerhalb des Kommunikationsnetzes, wobei - wie nachfolgend noch näher erläutert wird - dem Vermittlungsknoten 200 von dem Anrufordner 1 zugewiesene Anrufe an der Bedienkonsole 7 bzw. dem Display 21 angezeigt, von der Vermittlungsperson entgegengenommen und an einen gewünschten Teilnehmer des Kommunikationsnetzes weitervermittelt werden können. In der Regel ist an jedem Netzknoten 100 - 300 eine Bedienkonsole 7 angeschlossen, mit deren Hilfe eingehende Anrufe an die angeschlossenen Teilnehmer 101, 102, 201, 202 bzw. 301, 302 weitervermittelt werden können. An die eigentliche Bedienkonsole 7 ist zudem eine Sprecheinrichtung 18 gekoppelt, über das die Vermittlungsperson eingehende Anrufe annehmen kann und zudem auch persönlich erreichbar ist.

Die Steuereinrichtung 14 umfaßt Nebensteuereinheiten 8-13, die jeweils in der Systemsoftware des Netzknotens 200 implementiert sind. Die Steuereinrichtung 14 stellt insbesondere die Schnittstelle zwischen dem Anrufordner 1 und der Bedienkonsole 7 des entsprechenden Vermittlungsplatzes dar.

Die Kommunikationsanlage ist derart ausgelegt, das unterschiedliche Anrufarten verarbeitet werden können. So kann beispielsweise zwischen einem Amtsanruf, einem internen Anruf (d. h. einem Anruf innerhalb des vorzugsweise privaten Kommunikationsnetzes), einem Notruf oder Zweitanrufen usw. unterschieden werden. Jedem Anruf bzw. jeder Anrufart kann durch entsprechende Programmierung der Kommunikationsanlage eine bestimmte Priorität zugewiesen werden. Anrufe normaler Priorität sind beispielsweise allgemein Erstanrufe, während Anrufe hoher Priorität beispielsweise Notrufe oder Zweitanrufe an die Vermittlungseinrichtung sind. Unter Zweitanrufen werden weitervermittelte Anrufe verstanden, die bei bestimmten Bedingungen wieder zu derselben Vermittlungseinrichtung, die den Anruf zuvor vermittelt hat, zurückkommen, während Erstanrufe von dem Anrufordner 1 beliebig einer freien Vermittlungseinrichtung zugeordnet werden. Dies können beispielsweise Wiederanrufe sein, wenn sich der angerufene Teilnehmer nach Vermittlung durch die Vermittlungseinrichtung innerhalb einer bestimmten Zeitspanne nicht meldet, oder Kettenanrufe, bei denen der Erstanrufer nach dem ersten Gespräch wieder zu derselben Vermittlungseinrichtung wieder zurückkommen will, da er einen weiteren Verbindungswunsch hat. Schließlich umfassen Zweitanrufe höherer Priorität auch zurückgeholte Anrufe nach Vermittlungsfehlern, d. h. Anrufe, bei denen die Vermittlungsperson einen Anrufer irrtümlich falsch vermittelt hat und diesen wieder zurückholen will, ehe der irrtümlich angerufene Teilnehmer den Anruf annimmt. All diesen Anrufen höherer Priorität ist gemeinsam, das sie rasch behandelt und sofort mit der Vermittlungseinrichtung verbunden werden sollen.

Eine gewisse Prioritätsbehandlung der Anrufe ist bereits in dem Anrufordner 1 implementiert. Wie bereits erwähnt worden ist, erfaßt der Anrufordner 1 alle innerhalb der ihm zugewiesenen Vermittlungseinrichtungsgruppe eingehenden Anrufe und verteilt diese weiter an die entsprechenden Vermittlungseinrichtungen. Die vom Anrufordner 1 erfaßten Anrufe werden nach einem Warteschlangenprinzip (FIFO-Prinzip) verarbeitet, d. h. die zuerst eingehenden Anrufe werden auch zuerst an die zuständigen Vermittlungseinrichtungen weitergeleitet. Der Anrufordner 1 erkennt jedoch bereits die Art und die Priorität eines jeden Anrufs und ordnet insbesondere abhängig von der Priorität die einzelnen Anrufe unterschiedlichen Warteschlangen 2 - 6 zu. Bei dem in Figur 1 dargestellten Fall unterscheidet somit der Anrufordner 1 zwischen fünf unterschiedlichen Prioritäten, wobei beispielsweise der Anrufordner 1 Anrufe mit der höchsten Priorität, wie z. B. Notrufe, in die Warteschlange 6 und normale Anrufe, d. h. Anrufe mit der geringsten Priorität, wie z. B. normale Amtsanrufe, in die Warteschlange 2 einreiht. Ebenso kann vorgesehen sein, daß pro Abfragetaste der Vermittlungseinrichtung bzw. der entsprechenden Bedienkonsole, d.h. pro Anrufart, eine Warteschlange mit entsprechenden Sub-Warteschlangen vorgesehen ist. Der Anrufordner 1 verteilt die in den Warteschlangen geparkten Anrufe zum einen abhängig von der Priorität der Anrufe und zum anderen - bei gleicher Priorität - abhängig vom Eintreffen der einzelnen Anrufe. Dies bedeutet, das beispielsweise ein in der Warteschlange 2 geparkter Anruf nur dann an eine Vermittlungseinrichtung weitergeleitet wird, wenn in den Warteschlangen 3 - 6 für Anrufe mit höherer Priorität keine Einträge vermerkt sind oder die Anrufe mit höherer Priorität mangels entsprechender Ressourcen nicht weitergereicht werden können.

Nachfolgend soll die Funktionsweise der in Figur 1 gezeigten Kommunikationsanlage näher erläutert werden.

Wie bereits erläutert worden ist, dient der Anrufordner 1 zum Anlegen der in dem Kommunikationsnetz auftretenden Anrufe an die entsprechenden Vermittlungseinrichtungen 7. Hat der Anrufordner 1 aus einer seiner Warteschlangen 2 - 6 einen zwischengeparkten Anruf entnommen, wird dieser über die Schnittstelleneinrichtung 16 der entsprechenden Vermittlungseinrichtung 7 an eine entsprechende Nebensteuereinrichtung (Subunit) 8 - 14 angelegt, wobei hierbei jeweils mindestens zwei Nebensteuereinrichtungen 8/9, 10/11 bzw. 12/13 einer entsprechenden Abfragetaste 23 der Tastatur 19 der Vermittlungseinrichtung beziehungsweise des Vermittlungsfernsprechers 7 zugewiesen sind. Diese Abfragetasten 23 sind mit "A", "M" und "P" bezeichnet. Des weiteren ist eine mit "R" bezeichnete Taste für die Anrufrückholung vorgesehen.

Die Abfragetasten 23 ("A", "M", "P") sind jeweils einer bestimmten Anrufart der Kommunikationsanlage zugeordnet. So kann über die mit "A" bezeichnete Abfragetaste 23 ein an der Vermittlungseinrichtung 7 gemeldeter Amtsruf, mit Hilfe der durch "M" bezeichneten Abfragetaste 23 ein interner Anruf des Kommunikationsnetzes, mit Hilfe der durch "P" bezeichneten Abfragetaste 23 ein Privatanruf für die Vermittlungsperson, welche die Vermittlungseinrichtung 7 bedient, und mit Hilfe der durch "R" bezeichneten Taste ein falsch vermittelter Anruf zurückgeholt und angenommen werden.

Wie bereits erläutert worden ist, sind für die Abfragetasten "A", "M" und "P" jeweils mindestens zwei Nebensteuereinrichtungen (Subunits) 8 - 13 vorgesehen. Jeweils eine dieser Nebensteuereinrichtungen dient zur Annahme von Anrufen mit normaler bzw. geringer Priorität, während die andere Nebensteuereinrichtung zur Annahme von besonderen Anrufen mit höherer Priorität der entsprechenden Anrufart dient. Die Abfragetasten 23 stellen die physikalischen Abfrageorgane der Vermittlungseinrichtung 7 dar, während die einzelnen Nebeneinrichtungen 8 - 13 die entsprechenden logischen Abfrageorgane darstellen und beispielsweise eine entsprechende Software mit Datenbasis umfassen, wobei die einzelnen logischen Abfrageorgane 8 - 13 jeweils für die entsprechende Anrufart der ihnen zugewiesenen physikalischen Abfrageorgane 23 zuständig sind.

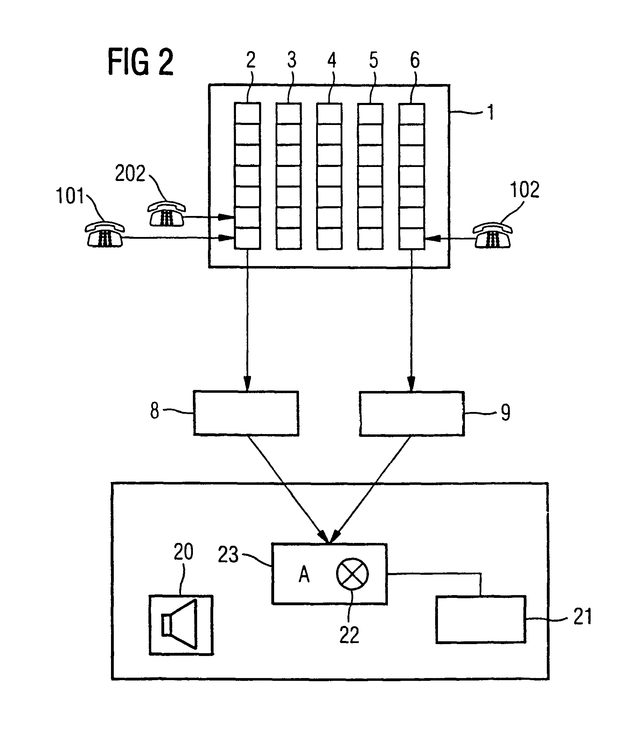

Die Zuständigkeit der einzelnen Nebensteuereinrichtungen 8 - 13 für die mit "A", "M" und "P" bezeichneten Abfragetasten 23 der Tastatur 19 soll nachfolgend näher unter Bezugnahme auf Figur 2 erläutert werden.

Figur 2 zeigt den Fall, daß in dem Anrufordner 1 in der Warteschlange 2 mehrere Anrufe mit normaler Priorität geparkt sind, während in der Warteschlange 6 ein Anruf höherer Priorität gespeichert ist.

Wie insbesondere in Figur 2 gezeigt ist, ist in der Warteschlange 2 beispielsweise ein Anruf des Teilnehmers 101 des Netzknotens 100 und ein Anruf des Teilnehmers 202 des Netzknotens 200, an den auch die Vermittlungseinrichtung 7 angeschlossen ist, gespeichert, während in der Warteschlange 2 beispielsweise ein Notruf des Teilnehmers 102 geparkt ist. Der Anrufordner 1 weist die in den Warteschlangen 2 - 6 geparkten Anrufe den einzelnen Vermittlungseinrichtungen 7 zu. Im vorliegenden Fall wollen beispielsweise die beiden Teilnehmer 101 und 102 einen Teilnehmer anrufen, für den die Vermittlungseinrichtung 7 zuständig ist. Bei beiden Anrufen der Teilnehmer 101 und 102 handelt es sich im betrachteten Fall insbesondere um Amtsanrufe, so daß von dem Anrufordner 1 beide Anrufe über die mit "A" bezeichnete Abfragetaste 23 an der Vermittlungseinrichtung 7 abgefragt werden können müssen. Da es sich bei dem Anruf des Teilnehmers 101 um einen Anruf mit niedrigerer Priorität handelt, belegt der Anrufordner 1 die Nebensteuereinrichtung 8 mit diesem Anruf, während zugleich die Nebensteuereinrichtung 9 mit dem Anruf des Teilnehmers 102 belegt wird, da dieser Anruf ein Anruf mit höchster Priorität ist. Beide Nebensteuereinrichtungen 8 und 9 entsprechen der Anrufart der beiden Anrufe und sind demnach der Abfragetaste 23 mit der Bezeichnung "A" zugeordnet. Jede Abfragetaste 23 weist beispielsweise eine Leuchtdiode 22 auf, so daß bei Eingehen eines Anrufs an der Vermittlungseinrichtung 7 nicht nur über den Lautsprecher 20 ein Klingelzeichen ausgegeben wird, sondern durch Blinken der entsprechenden Abfragetaste auch der Typ des anliegenden Anrufs mitgeteilt wird. Ergänzend kann über das Display 21 der Vermittlungseinrichtung 7 der Anrufer sowie die entsprechende Anrufart ausgegeben werden.

Bei Mitteilung eines anliegenden Anrufs über den Lautsprecher 20, die Leuchtdiode 22 und/oder das Display 21 weiß die Vermittlungsperson in der Regel noch nicht, ob es sich bei dem anliegenden Anruf um einen Anruf mit einer höheren oder niedrigeren Priorität handelt. Zudem ist der Vermittlungsperson nicht bekannt, ob für die jeweilige blinkende Abfragetaste 23 möglicherweise sogar zwei Anrufe über die Nebensteuereinrichtungen 8 und 9, d. h. ein Anruf mit niedriger Priorität und ein Anruf mit hoher Priorität, anliegen. Daher kann vorgesehen sein, daß bei Anliegen eines höherprioren Anrufs das Display 21 der entsprechenden Bedienkonsole 7 automatisch mit Daten zu dem höherprioren Anruf überschrieben wird, so daß die Vermittlungsperson über anliegende höherpriore Anrufe oder die Tatsache, daß mehrere Anrufe warten, informiert ist. Auf jeden Fall betätigt die Vermittlungsperson die Abfragetaste 23, im vorliegenden Fall die Abfragetaste 23 mit der Bezeichnung "A". Liegen an der Nebensteuereinrichtung 9 keine besonderen Anrufe an, wird durch diese Aktion der an der Nebensteuereinrichtung 8 anliegende Anruf, d. h. der Anruf mit niedriger Priorität, abgefragt und von der Vermittlungsperson angenommen. Liegt jedoch an der Nebensteuereinrichtung 9 ein Anruf mit höherer Priorität an, wird auf jeden Fall nach Betätigung der entsprechenden Abfragetaste dieser Anruf durchgeschaltet und angenommen, d. h. lediglich die Nebensteuereinrichtung 9 wird aktiviert und geht in den Gesprächszustand über, während ein möglicherweise an der Nebensteuereinrichtung 8 anliegender Anruf niedriger Priorität zunächst noch zwischengeparkt bleibt und erst dann über die entsprechende Abfragetaste 23 angenommen werden kann, wenn der Anruf mit der höheren Priorität der Nebensteuereinrichtung 9 weitervermittelt worden ist. Auf diese Weise wird sichergestellt, daß Anrufe mit höherer Priorität, d. h. besondere Anrufe, die besonders schnell und unmittelbar behandelt und weitervermittelt werden sollen und später als die bereits anliegenden Anrufe zu der Vermittlungseinrichtung kommen, nicht unnötig lange in den Warteschlangen des Anrufordners 1 zwischengeparkt werden und insbesondere weiterverarbeitet werden können, auch wenn bereits Anrufe mit niedrigerer Priorität an den einzelnen Nebensteuereinrichtungen der Vermittlungseinrichtung 7 anliegen.

Nachdem die Vermittlungsperson einen Anruf entgegengenommen hat, kann sie durch Betätigen der in Figur 1 gezeigten Wähltasten der Tastatur 19 den gewünschten Zielteilnehmer anwählen und somit den Anruf weitervermitteln.

Die Vermittlungseinrichtung 7 ist vorteilhafterweise derart ausgestaltet, daß bei Eingehen eines Anrufs, d. h. bei Belegung einer der Nebensteuereinrichtungen der Vermittlungseinrichtung, automatisch an dem Display 21 der Vermittlungseinrichtung der Anruf mit der höchsten Priorität angezeigt wird. Durch die zuvor beschriebene Funktionalität der Vermittlungseinrichtung mit dem Zusammenwirken von zwei Nebensteuereinrichtungen in Bezug auf jeweils eine Abfragetaste ist in diesem Fall stets sichergestellt, daß auch der angezeigte Anruf mit der höheren Priorität nach Betätigen der entsprechenden Abfragetaste angenommen wird.

Gemäß einer weiteren besonderen Ausgestaltung der erfindungsgemäß vorgeschlagenen Vermittlungseinrichtung kann vorgesehen sein, daß über das Display bzw. dem Bildschirm 21 stets alle anliegenden Anrufe der Vermittlungsperson angezeigt werden, wobei diese anschließend über die Tastatur oder bei einer graphischen Bedienoberfläche über eine Maus mit einer entsprechenden Cursorbewegung den zur Weitervermittlung gewünschten Anruf auswählen und annehmen kann.

Eine Besonderheit der in Figur 1 gezeigten Vermittlungseinrichtung 7 ist die mit "R" bezeichnete Taste 23 der Bedienkonsole 7, deren Funktion darin besteht, an ein falsches Zielgerät weitervermittelte Anrufe wieder zu der Vermittlungseinrichtung 7 zurückzuholen, um diese anschließend an den korrekten Teilnehmer weiterzuvermitteln. Hierfür ist jedoch Voraussetzung, daß der falsch vermittelte Anruf noch nicht von dem gerufenen Teilnehmer angenommen worden ist, da ansonsten die Vermittlungseinrichtung 7 nicht mehr auf den falsch vermittelten Anruf zugreifen kann. Sobald die Vermittlungsperson die mit "R" bezeichnete Taste 23 betätigt hat, wird der irrtümlich vermittelte Anruf sofort auf eine der jeweiligen Anrufart entsprechende Nebensteuereinheit 9, 11 oder 13 geschaltet, die für Anrufe hoher Priorität verantwortlich ist. D.h. ein zurückzuholender Anruf wird grundsätzlich wie ein eingehender Anruf höchster Priorität behandelt, so daß der zurückgeholte Anruf sofort von der Vermittlungsperson angenommen und neu vermittelt werden kann.

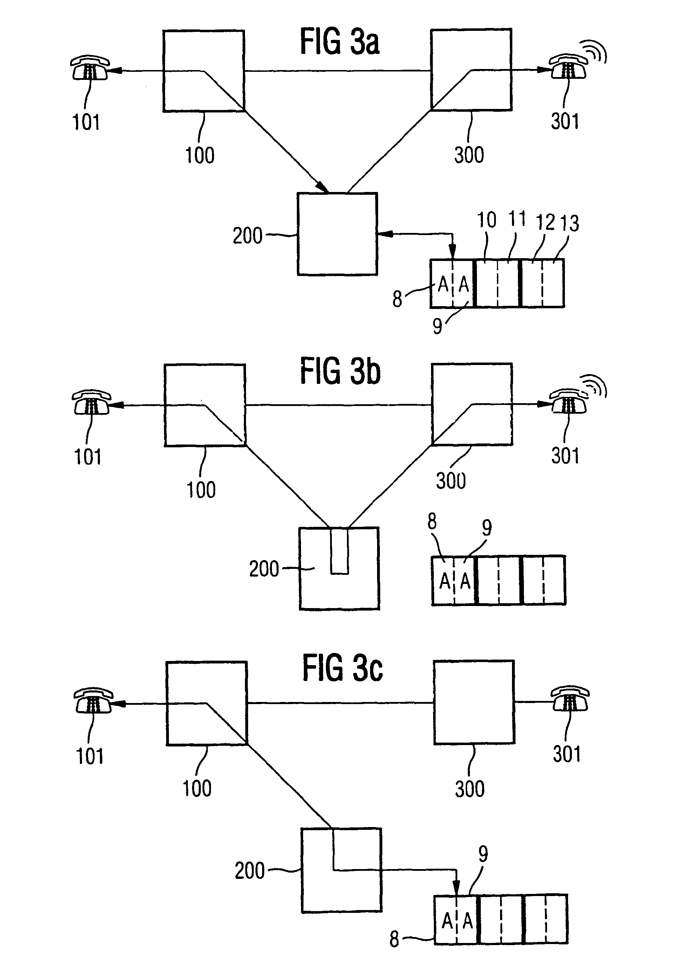

Das Zurückholen eines falsch vermittelten Anrufs soll nachfolgend allgemein anhand des in Figur 3a - c dargestellten Blockschaltbilds erläutert werden.

Figur 3a zeigt einen Zustand, bei dem von dem Teilnehmer 101 des Netzknotens 100 der Teilnehmer 301 des Netzknotens 300 angerufen wird, wobei von der dem Netzknoten 200 zugeordneten Bedienkonsole 7 der entsprechende Verbindungspfad vermittelt werden soll. Dies bedeutet, daß der Anruf des Teilnehmers 101 innerhalb des Kommunikationsnetzes zu dem Netzknoten 200 weitergeleitet wird und dort - abhängig von der Priorität dieses Anrufs - durch den in Figur 1 oder 2 gezeigten Anrufordner 1 entweder die Nebensteuereinrichtung 8 oder die Nebensteuereinrichtung 9 mit diesem Anruf belegt und aktiviert wird, da es sich im vorliegenden Fall beispielsweise um einen Amtsanruf handelt, der über die mit "A" bezeichnete Abfragetaste 23 (vgl. Figur 1 oder 2) abgefragt werden kann. Nach Betätigen der entsprechenden Abfragetaste nimmt die Vermittlungsperson den Anruf des Teilnehmers 101 an und vermittelt den Anruf gemäß dem Wunsch des Anrufers 101 weiter, so daß das Endgerät des gerufenen Teilnehmers 301 klingelt.

Figur 3b zeigt den Zustand, daß der Anruf über den Netzknoten 200 zu dem Teilnehmer 301 weitervermittelt worden ist, wobei in diesem Zustand die Bedienkonsole 7 von dem eigentlichen Verbindungspfad zwischen den Teilnehmern 101 und 301 getrennt, d. h. nicht mehr zwischengeschaltet ist, und keine der Nebensteuereinrichtungen 8-13 mit dem weitervermittelten Anruf belegt ist.

Anschließend sei angenommen, daß an der Tastatur des Vermittlungsfernsprechers 7 die mit "R" bezeichnete Taste betätigt worden ist, da die Vermittlungsperson erkannt hat, daß der Anruf des Teilnehmers 101 irrtümlich zu dem Teilnehmer 301 vermittelt worden ist, obwohl beispielsweise der Teilnehmer 101 den Teilnehmer 302 des Netzknotens 300 sprechen wollte. In diesem Fall ist wird nach Betätigen dieser Rückholtaste die Verbindung zwischen den Netzknoten 200 und 300 gelöst und der Vermittlungsplatz der Bedienkonsole 7 über den Netzknoten 200 unmittelbar wieder mit dem Anrufer 101 verbunden, um mit diesem wieder in den Gesprächszustand zu gelangen. Dabei wird der zurückgeholte Anruf entsprechend seiner Anrufart unmittelbar auf die Nebensteuereinrichtung 9 dieses Vermittlungsplatzes gelegt, da der zurückgeholte Anruf wie ein Anruf höchster Priorität zu behandeln ist, so daß die Vermittlungsperson sofort das Gespräch mit dem Anrufer 101 aufnehmen und einen erneuten Vermittlungsversuch unternehmen kann.

Ergänzend wird darauf hingewiesen, daß die Vermittlungseinrichtung 7 bzw. die Kommunikationsanlage derart ausgestaltet ist, das die Funktion der für die Anrufe mit höherer Priorität zuständige Nebensteuereinrichtungen wahlweise deaktiviert werden kann, so daß - wie an sich bereits aus dem Stand der Technik bekannt ist - die Anrufverarbeitung ausschließlich in Übereinstimmung mit der Anrufweiterleitung durch den Anrufordner 1 über die für die normalen Anrufe zuständigen Nebensteuereinrichtungen erfolgt. Dies ist insbesondere dann sinnvoll, wenn die Vermittlungsperson nicht mit Ausgabe von Anrufen mit höheren Prioritäten über das Display bzw. den Bildschirm 21 mit nachfolgender Auswahl usw. belastet werden soll.

## Patentansprüche

1. Kommunikationsanlage für ein Kommunikationsnetz, mit mindestens einer Vermittlungseinrichtung (7), um Anrufe innerhalb des Kommunikationsnetzes anzunehmen und an einen gewünschten Teilnehmer des Kommunikationsnetzes weiterzuvermitteln, und
mit mindestens einer Anrufverteileinrichtung (1), um eingehende Anrufe innerhalb des Kommunikationsnetzes auf die mindestens eine Vermittlungseinrichtung (7) zu verteilen, wobei die Vermittlungseinrichtung umfaßt:
erste Steuermittel (8, 10, 12), an die die Anrufverteileinrichtung (1) automatisch Anrufe niedriger Priorität anlegt, zweite Steuermittel (9, 11, 13), an die die Anrufverteileinrichtung (1) automatisch Anrufe höherer Priorität anlegt, und Anrufannahmemittel (23), welche den ersten und zweiten Steuermitteln (8 - 13) gemeinsam zugewiesen sind, wobei bei Betätigung der Anrufannahmemittel (23) automatisch ein an den zweiten Steuermitteln (9, 11, 13) anliegender Anruf oder, falls kein Anruf an den zweiten Steuermitteln (9, 11, 13) anliegt, ein an den ersten Steuermitteln (8, 10, 12) anliegender Anruf angenommen wird.

2. Kommunikationsanlage nach Anspruch 1,
**dadurch gekennzeichnet,**
**daß** die Kommunikationsanlage derart ausgebildet ist, daß die Anrufe unterschiedlichen Anrufarten zugewiesen werden können, und
**daß** die Vermittlungseinrichtung (7) anrufartspezifisch erste und zweite Steuermittel (8, 9; 10, 11; 12, 13) sowie entsprechende Anrufannahmemittel (23; A, P, M) umfaßt, wobei die Anrufverteileinrichtung (1) die eingehenden Anrufe anrufartspezifisch an die entsprechenden ersten und zweiten Steuermittel (8, 9, 10, 11; 12, 13) der Vermittlungseinrichtung (7) anlegt.

3. Kommunikationsanlage nach Anspruch 2,
**dadurch gekennzeichnet,**
**daß** die Kommunikationsanlage derart ausgebildet ist, daß für jede Anrufart eine entsprechende Priorität konfigurierbar ist, wobei die Anrufverteileinrichtung (1) die eingehenden Anrufe prioritätsabhängig und bei Anrufen gleicher Priorität gemäß einem FIFO-Prinzip an die ersten bzw. zweiten Steuermittel (8 - 13) der Vermittlungseinrichtung (7) anlegt.

4. Kommunikationsanlage nach einem der vorhergehenden Ansprüche,
**dadurch gekennzeichnet,**
**daß** die Funktion der zweiten Steuermittel (9, 11, 13) benutzerspezifisch aktivierbar und deaktivierbar ist, wobei bei deaktivierten zweiten Steuermitteln (9, 11, 13) die Anrufverteileinrichtung (1) die eingehenden Anrufe nacheinander stets an die ersten Steuermittel (8, 10, 12) der Vermittlungseinrichtung (7) anlegt.

5. Kommunikationsanlage nach einem der vorhergehenden Ansprüche,
**dadurch gekennzeichnet,**
**daß** Anrufrückholmittel (R) vorgesehen sind, um einen von der Vermittlungseinrichtung (7) vermittelten, jedoch vom gewünschten Teilnehmer noch nicht angenommenen Anruf auf die Vermittlungseinrichtung (7) zurückzuschalten und anzunehmen.

6. Kommunikationsanlage nach Anspruch 5,
**dadurch gekennzeichnet,**
**daß** die Kommunikationsanlage derart ausgebildet ist, daß ein auf die Vermittlungseinrichtung (7) zurückzuschaltender Anruf wie ein Anruf mit einer hohen Priorität behandelt wird.

7. Kommunikationsanlage nach Anspruch 6 und einem der Ansprüche 2 oder 3,
**dadurch gekennzeichnet,**
**daß** bei Betätigung der Anrufrückholmittel (R) der von der Vermittlungseinrichtung (7) zuletzt vermittelte und von dem gewünschten Teilnehmer noch nicht angenommene Anruf automatisch anrufartspezifisch an die entsprechenden zweiten Steuermittel (9, 1, 13) angelegt wird.

8. Kommunikationsanlage nach einem der Ansprüche 5 - 7,
**dadurch gekennzeichnet,**
**daß** die Anrufannahmemittel und/oder Anrufrücknahmemittel eine Tastatur (19) umfassen.

9. Kommunikationsanlage nach einem der Ansprüche 5 - 8,
**dadurch gekennzeichnet,**
**daß** die Anrufannahmemittel und/oder Anrufrücknahmemittel eine graphische Benutzeroberfläche (21) umfassen.

10. Kommunikationsanlage nach einem der vorhergehenden Ansprüche,
**dadurch gekennzeichnet,**
**daß** Anzeigemittel (21, 22) zum Anzeigen der an der Vermittlungseinrichtung (7) anliegenden Anrufe vorgesehen sind.

11. Kommunikationsanlage nach Anspruch 10,
**dadurch gekennzeichnet,**
**daß** die Anzeigemittel (21) wenigstens alle an der Vermittlungseinrichtung (7) anliegenden Anrufe höherer Priorität anzeigen.

## Claims

1. Communications system for a communications network, comprising at least one switching equipment (7) for the purpose of accepting calls within the communications network and forwarding said calls to a desired subscriber of the communications network, and
comprising at least one call distribution equipment (1) for the purpose of distributing incoming calls within the communications network to the at least one switching equipment (7), wherein the switching equipment comprises:
first control means (8, 10, 12) to which the call distribution equipment (1) automatically allocates calls of lower priority, second control means (9, 11, 13) to which the call distribution equipment (1) automatically allocates calls of higher priority, and
call acceptance means (23) which are jointly assigned to the first and second control means (8 - 13), wherein upon actuation of the call acceptance means (23) a call that is pending at the second control means (9, 11, 13) or, if no call is pending at the second control means (9, 11, 13), a call that is pending at the first control means (8, 10, 12) is accepted.

2. Communications system according to claim 1,
**characterised in that**
the communications system is embodied in such a way that the calls can be assigned to different call types, and
that the switching equipment (7) comprises first and second control means (8, 9; 10, 11; 12, 13) specific to call types as well as corresponding call acceptance means (23; A, P, M), wherein the call distribution equipment (1) allocates the incoming calls to the corresponding first and second control means (8, 9; 10, 11; 12, 13) of the switching equipment (7) on a call-type-specific basis.

3. Communications system according to claim 2,
**characterised in that**
the communications system is embodied in such a way that a corresponding priority can be configured for each call type, with the call distribution equipment (1) allocating the incoming calls according to priority and, in the event of calls having equal priority, allocating said incoming calls to the first or second control means (8 - 13) of the switching equipment (7) according to a FIFO principle.

4. Communications system according to one of the preceding claims,
**characterised in that**
the function of the second control means (9, 11, 13) can be activated or deactivated on a user-specific basis, with the call distribution equipment (1) sequentially allocating the incoming calls always to the first control means (8, 10, 12) of the switching equipment (7) if the second control means (9, 11, 13) are deactivated.

5. Communications system according to one of the preceding claims,
**characterised in that**
call retrieval means (R) are provided for the purpose of switching a call which has been switched by the switching equipment (7) but has not yet been accepted by the desired subscriber back to the switching equipment (7) and accepting it.

6. Communications system according to claim 5,
**characterised in that**
the communications system is embodied in such a way that a call which is to be switched back to the switching equipment (7) is handled like a call having a high priority.

7. Communications system according to claim 6 and one of claims 2 or 3,
**characterised in that**
upon actuation of the call retrieval means (R) the call which was switched last by the switching equipment (7) and has not yet been accepted by the desired subscriber is automatically allocated to the corresponding second control means (9, 11, 13) on a call-type-specific basis.

8. Communications system according to one of claims 5 -7,
**characterised in that**
the call acceptance means and/or call retrieval means include a keyboard (19).

9. Communications system according to one of claims 5 - 8,
**characterised in that**
the call acceptance means and/or call retrieval means include a graphical user interface (21).

10. Communications system according to one of the preceding claims,
**characterised in that**
display means (21, 22) are provided for displaying the calls that are pending at the switching equipment (7).

11. Communications system according to claim 10,
**characterised in that**
the display means (21) display at least all calls of higher priority that are pending at the switching equipment (7).

## Revendications

1. Installation de communication pour un réseau de communication, comprenant au moins un dispositif commutateur (7), pour accepter des appels à l'intérieur du réseau de communication et les transmettre à un abonné souhaité du réseau de communication, et
au moins un dispositif pour la répartition d'appels (1) afin de répartir les appels entrant à l'intérieur du réseau de communication sur le au moins un dispositif commutateur (7), le dispositif commutateur comprenant :
des premiers moyens de commande (8, 10, 12), sur lesquels le dispositif de répartition d'appels (1) applique automatiquement des appels de faible priorité,
des seconds moyens de commande (9, 11, 13), sur lesquels le dispositif de répartition d'appels (1) applique automatiquement des appels de priorité supérieure, et des moyens de réception d'appel (23), qui sont attribués conjointement aux premiers et aux seconds moyens de commande (8 - 13), un appel s'appliquant sur les seconds moyens de commande (9, 11, 13) ou, lorsqu'aucun appel ne s'applique sur les seconds moyens de commande (9, 11, 13), un appel s'appliquant sur les premiers moyens de commande (8, 10, 12) étant accepté automatiquement en cas d'actionnement des moyens d'acceptation d'appel (23).

2. Installation de communication selon revendication 1,
**caractérisée en ce que**
l'installation de communication est conçue de telle sorte que les appels peuvent être attribués à différents types d'appel et
**en ce que** le dispositif commutateur (7) comporte de façon spécifique au type d'appel des premiers et des seconds moyens de commande (8, 9 ; 10, 11 ; 12, 13) ainsi que les moyens d'acceptation d'appel (23 ; A, P, M) appropriés, le dispositif de répartition d'appels (1) appliquant les appels entrant de façon spécifique au type d'appel sur les premiers et seconds moyens de commande (8, 9 ; 10, 11 ; 12, 13) correspondants du dispositif commutateur (7).

3. Installation de communication selon la revendication 2,
**caractérisée en ce que**
l'installation de communication est conçue de telle sorte qu'une priorité appropriée peut être configurée pour chaque type d'appel, le dispositif de répartition d'appels (1) appliquant les appels entrant en fonction de la priorité et en cas d'appels de priorité identique selon un principe FIFO sur les premiers et/ou seconds moyens de commande (8 - 13) du dispositif commutateur (7).

4. Installation de communication selon l'une quelconque des revendications précédentes,
**caractérisée en ce que**
la fonction des seconds moyens de commande (9, 11, 13) peut être activée et désactivée de façon spécifique à l'utilisateur, le dispositif de répartition d'appels (1) appliquant les appels entrant les uns après les autres toujours sur les premiers moyens de commande (8, 10, 12) du dispositif commutateur (7) lorsque les seconds moyens de commande (9, 11, 13) sont désactivés.

5. Installation de communication selon l'une quelconque des revendications précédentes,
**caractérisée en ce que**
des moyens d'initialisation d'appel (R) sont prévus, afin de basculer et d'accepter un appel, qui a été transmis par le dispositif commutateur (7), mais n'a pas encore été accepté par l'abonné souhaité, sur le dispositif commutateur (7).

6. Installation de communication selon la revendication 5,
**caractérisée en ce que**
l'installation de communication est conçue de telle sorte qu'un appel à basculer sur le dispositif commutateur (7) est traité comme un appel avec une priorité élevée.

7. Installation de communication selon la revendication 6 et l'une des revendications 2 ou 3,
**caractérisée en ce que**,
en cas d'actionnement des moyens d'initialisation d'appel (R), l'appel, qui a été transmis en dernier par le dispositif commutateur (7) et n'a pas encore été accepté par l'abonné souhaité, est appliqué automatiquement de façon spécifique au type d'appel sur les seconds moyens de commande (9, 11, 13) correspondants.

8. Installation de communication selon l'une quelconque des revendications 5 à 7,
**caractérisée en ce que**
les moyens de réception d'appel et/ou les moyens d'initialisation d'appel comportent un clavier (19).

9. Installation de communication selon l'une quelconque des revendications 5 à 8,
**caractérisée en ce que**
les moyens d'acceptation d'appel et/ou les moyens d'initialisation d'appel comportent une interface utilisateur (21) graphique.

10. Installation de communication selon l'une quelconque des revendications précédentes,
**caractérisée en ce que**
des moyens d'affichage (21, 22) sont prévus pour l'affichage des appels s'appliquant sur le dispositif commutateur (7).

11. Installation de communication selon la revendication 10,
**caractérisée en ce que**
les moyens d'affichage (21) indiquent au moins tous les appels, s'appliquant sur le dispositif commutateur (7), de priorité supérieure.
